# FASCICULE DE BREVET EUROPEEN

(11) **EP 2 766 184 B1**
(45) Date de publication et mention de la délivrance du brevet: **08.12.2021**
(21) Numéro de dépôt: 12780249.4
(22) Date de dépôt: 12.10.2012
(51) Int. Cl.: B32B 17/10, C03B 33/07, C03B 23/023, C03B 23/025, C03B 23/03, C03B 23/035, C03B 27/004, C03B 27/04, C03B 27/044

(54) **FABRICATION D'UN VITRAGE FEUILLETE**
HERSTELLUNG EINER VERBUNDGLASSCHEIBE
PRODUCTION OF A LAMINATED GLASS PANEL

(30) Priorité: 14.10.2011 FR 1159322
(43) Date de publication de la demande: 20.08.2014
(60) Demande divisionnaire: 21195613.1
(73) Titulaire: SAINT-GOBAIN GLASS FRANCE, 92400 Courbevoie (FR)
(72) Inventeur: BERARD, Stéphane, F-60250 Mouy (FR); HENNION, Alexandre, F-60280 Venette (FR); FREBOURG, Philippe, F-60300 Senlis (FR)
(74) Mandataire: Saint-Gobain Recherche
(86) Numéro de dépôt international: PCT/FR2012/052329
(87) Numéro de publication internationale: WO 2013/054059

(56) Documents cités:
- EP-A1- 1 834 820
- WO-A1-02/07967
- WO-A1-2006/129504
- WO-A1-2010/100223
- DE-A1- 4 324 847
- DE-A1- 10 327 559
- DE-A1-102004 063 377
- DE-A1-102006 056 501
- DE-A1-102009 017 805
- DE-T2- 60 014 692
- DE-U1-202005 006 879
- GB-A- 1 289 488
- US-A- 2 897 632
- US-A- 3 231 352
- US-A- 3 909 226
- US-A- 4 124 367
- US-A- 5 974 834
- US-A1- 2009 045 655

## Description

L'invention concerne un procédé de fabrication d'un vitrage feuilleté comprenant sa découpe après assemblage de substrats verriers avec un intercalaire du type matériau polymère. La découpe est réalisée dans toute l'épaisseur du feuilleté et peut notamment être réalisée pour constituer au moins une partie évidée comme un trou ou une encoche, les bords de cette zone présentant des contraintes résiduelles de compression. La découpe peut également être réalisée d'un bord à l'autre du vitrage.

Lors de leur utilisation, les vitrages sont soumis à des sollicitations thermiques ou mécaniques, en particulier lors de leur manipulation, auxquelles ils doivent résister pour éviter leur casse. Par exemple, les pare-brises d'un véhicule subissent des efforts mécaniques en leur périphérie lors de leur montage sur une carrosserie, que ce soit manuellement ou via un robot.

Outre les contraintes mécaniques, le vitrage est soumis à des contraintes d'origine thermique lors des cycles de dégivrage du pare-brise.

Ces sollicitations aux bords, d'origine thermique ou mécanique, occasionnent des risques de casse notamment sur les bords du vitrage. Afin de garantir une bonne résistance mécanique du vitrage, des contraintes de bord en compression sont générées lors de la fabrication du vitrage. Ces contraintes de bord sont connues et spécifiées dans le cahier des charges des constructeurs automobiles.

Outre les bords d'un vitrage présentant des contraintes de compression, des contraintes de compression sont également générées en pourtour de parties évidées.

En effet, les parties évidées dans un vitrage, sont conçues pour accueillir des éléments fonctionnels rapportés, comme par exemple une antenne fixée au sein d'un perçage établi dans l'épaisseur et à distance du bord du vitrage. Ces parties évidées vont créer deux problématiques pour la résistance aux sollicitations mécaniques : l'évidement crée un bord qui va devoir résister au chargement lors de l'utilisation de vitrage et l'évidement crée une zone de concentration de contraintes due à l'enlèvement local de matière (trou, encoche). A cet égard, le vitrage est soumis en bordure de son trou ou encoche à diverses sollicitations mécaniques que sont celles permanentes dues à la fixation de l'antenne, et celles transitoires survenant en particulier lors d'un choc sur l'antenne tel que lors d'un passage surbaissé pour le véhicule. De même, si pour le vitrage d'un haillon arrière le trou est destiné à recevoir un essuie-glace, le bord du trou doit résister à la fermeture du haillon.

Les contraintes dans les produits verriers sont générées lorsque le verre est chauffé à une température à partir de laquelle il perd son comportement élastique pur et devient légèrement plastique, du type liquide viscoélastique. Lors du refroidissement et en fonction de l'inhomogénéité thermique initiale de l'échantillon et/ou de l'hétérogénéité du refroidissement lui-même, certaines zones se figent avant d'autres. A cause de la dilatation thermique, des contraintes permanentes de compression et d'extension apparaissent au sein de l'échantillon lors de son refroidissement. Qualitativement, les parties où le verre s'est figé en premier lieu correspondent aux parties où se concentrent les contraintes de compression alors que les parties où le verre s'est figé avec retard concentrent les zones de contraintes en extension. Les contraintes de bord décrites dans la présente demande sont des contraintes de membrane qui peuvent se définir en tout point M du matériau et pour une direction donnée, comme la moyenne du champ de contraintes en ce point et selon cette direction, la moyenne étant effectuée dans toute l'épaisseur de l'échantillon. En bord d'échantillon, seule la composante de contraintes de membrane parallèle au bord est appropriée ; la composante perpendiculaire a une valeur nulle. Aussi toute méthode de mesure permettant une mesure des contraintes moyennes le long d'un bord et à travers l'épaisseur de l'échantillon est pertinente. Les méthodes de mesure des contraintes de bord utilisent les techniques de photoélasticimétrie. Les deux méthodes décrites dans des normes ASTM citées ci-dessous permettent de mesurer les valeurs de contraintes de bord :
- la méthode utilisant le compensateur de Babinet et décrite dans la norme ASTM C1279 - 2009 - 01, procédure B;
- les mesures effectuées avec des appareils du commerce comme le Sharples modèle S-67 commercialisé par la société Sharples Stress Engineers, Preston, UK et utilisant un compensateur dit de Sénarmont ou Jessop-Friedel. Le principe de la mesure est décrit dans la norme ASTM F218 - 2005 - 01;

Dans le cadre de la présente demande, les valeurs de contraintes en compression sont déterminées par la méthode décrite dans la norme ASTM F218 - 2005 - 01.

Généralement les valeurs de contraintes en compression sont déterminées entre 0,1 et 2 mm d'un bord et de préférence entre 0,5 et 1 mm d'un bord. Pour le cas où une zone locale de contraintes en compression n'entoure pas un orifice dans la mesure où c'est une zone laissant la possibilité de créer un orifice ultérieurement, alors la valeur de contraintes est déterminable après perçage d'un orifice suivi de la mesure de la contrainte à la distance du bord de l'orifice comme cela vient d'être indiqué.

Un procédé connu pour fabriquer un vitrage feuilleté aux courbures spécifiques pour la carrosserie à laquelle il est destiné et générer des contraintes de compression en bord d'une partie évidée de ce vitrage, consiste à :
- percer indépendamment l'une de l'autre deux feuilles de verre plat à l'endroit souhaité de l'emplacement de la partie évidée ;
- regrouper les deux feuilles de verre en les superposant (mais sans intercalaire polymère à ce stade), effectuer leur bombage par gravité à la température de bombage (le verre étant chaud ; on rappelle que l'étape de bombage sert à donner les courbures et donc la forme tridimensionnelle finale au vitrage) ;
- procéder à un refroidissement contrôlé général de l'ensemble du vitrage générant des contraintes de compression ;
- placer une feuille intermédiaire de matériau polymère (généralement du type polyvinylbutyral souvent appelée PVB) entre les deux feuilles de nouveau superposées, réaliser un dégazage, c'est-à-dire éliminer l'air emprisonné entre les feuilles de verre et l'intercalaire, et les assembler en autoclave ;
- finaliser le trou en découpant le PVB au niveau des deux perçages dans le verre (alternativement, on peut aussi découper le trou dans la feuille de PVB avant assemblage).

Cependant, ce procédé présente certaines difficultés à surmonter :
- en dépit des perçages effectués indépendamment dans les deux feuilles de verre respectives selon deux phases distinctes, il convient d'assurer une bonne concentricité des deux perçages lorsque les deux feuilles de verre sont ensuite associées ;
- la concentricité de ces perçages doit également être parfaite lors de la phase de bombage qui précède l'étape de refroidissement contrôlé, sinon certaines parties périphériques de chaque perçage se retrouvent confinées, se refroidissant plus lentement, engendrant des contraintes de compression notablement plus faibles. Or, ce parfait agencement, d'autant plus sensible qu'en particulier la taille de l'une des feuilles de verre est en général légèrement plus grande que celle de l'autre feuille pour un produit feuilleté, dépend de la précision de dépose, du placement et du maintien des feuilles l'une par rapport à l'autre sur l'outillage de bombage et lors du convoyage des feuilles de verre dans le four ;
- différentes complications peuvent survenir lors du dégazage selon le procédé utilisé ; en particulier, si l'on effectue un assemblage par calandrage, le pressage des feuilles de verre avec l'intercalaire sollicite mécaniquement et directement la périphérie du trou. Si ce dernier présente des zones de contraintes de compression inhomogènes, la casse du vitrage peut se produire. Une autre méthode de dégazage, consistant à faire le vide entre la feuille de verre et la feuille de PVB (par la méthode du green snake [joint périphérique dans lequel on fait le vide] ou de la poche à vide) est difficile à mettre en œuvre car les trous sur les feuilles ne permettent pas de faire le vide correctement ;
- le fait de bomber des verres prépercés, fait apparaitre des défauts en optique en réflexion (légère distorsion en périphérie du trou).

Un autre procédé de fabrication consiste à réaliser un bombage feuille à feuille et non simultanément avec les feuilles superposées tel que décrit ci-dessus, supprimant les inconvénients afférant à ce dernier procédé. Toutefois, ce bombage indépendant des feuilles de verre présente certaines limitations telles que :
- les deux feuilles de verre doivent être émaillées en périphérie ;
- lorsque les épaisseurs ou les teintes sont différentes entre les deux feuilles, leur formage n'est pas totalement identique et un assemblage fiable et robuste de ces deux feuilles devient difficile à réaliser;
- il est délicat d'assembler des pièces complexes, notamment pour des vitrages avec des découpes du type encoches.

Une autre solution a encore été développée pour fabriquer un vitrage feuilleté comportant une pièce fixée dans l'évidement adapté du vitrage. Le brevet américain US 4124367 propose ainsi pour palier le risque de fabriquer un vitrage feuilleté dont l'évidement aurait des contraintes de compression de bord qui seraient plus faibles dans l'une des feuilles de verre et risquant la casse du vitrage lors de la fixation (par vissage ou collage) d'une pièce dans l'évidement, de ne créer des contraintes de compression en bord de l'évidement que pour une seule feuille de verre, cette feuille de verre présentant en outre un orifice de dimension inférieure à celui de l'autre feuille de verre associée. Par conséquent, la pièce n'est fixée qu'à une seule feuille de verre, celle d'orifice plus petit et pourvu des contraintes de compression de bord maitrisées.

Néanmoins, le produit final est moins robuste aux sollicitations mécaniques, car la pièce n'est tenue qu'à une seule feuille de verre.

L'invention a notamment pour but de proposer un procédé de fabrication d'un vitrage feuilleté doté selon toute son épaisseur d'au moins un bord découpé après assemblage des substrats verriers en feuilleté, ledit bord présentant des contraintes permanentes de compression de bord. Le bord découpé peut notamment avoir la forme d'un trou ou d'une encoche. Ce procédé est simplifié par rapport aux procédés existants pour les vitrages feuilletés à trous ou à encoche. Il garantit des contraintes de compression du bord découpé selon une intensité homogène et suffisante le long de ce bord, et cela pour tous les substrats verriers assemblés dans le vitrage feuilleté.

Selon l'invention, une partie évidée dans le vitrage feuilleté est un trou ou une encoche traversant l'intégralité de son épaisseur. Un trou (ou orifice) présente un contour fermé sur lui-même entièrement à l'intérieur des faces principales du vitrage feuilleté. Une encoche constitue une discontinuité du bord externe du vitrage pour former une partie évidée vers l'intérieur des faces principales du vitrage. C'est en quelque sorte un trou ouvert dans le bord du vitrage.

L'invention permet aussi de découper un vitrage feuilleté (sans nécessairement réaliser véritablement un trou ou une encoche) selon une ligne spécifique après son assemblage, dès lors que les substrats verriers qu'il contient ont subi un refroidissement local particulier au niveau des lignes devant être découpées après assemblage. Dans ce cas, la découpe de l'assemblage feuilleté peut mener à plusieurs parties séparées les unes des autres, chacune de ces parties présentant néanmoins les contraintes de bord nécessaires à leur solidité sur tout leur pourtour. L'avantage est ici de pouvoir disposer de différentes parties parfaitement coïncidentes entre elles au niveau de leurs bords (découpés selon l'invention) et au niveau de leurs formes générales, les courbures de l'une des parties étant nécessairement parfaitement dans le prolongement d'une autre partie, lorsqu'on rapproche les différentes parties par leurs bords découpés selon l'invention.

Selon l'invention, le procédé de fabrication d'un vitrage feuilleté comprenant au moins deux substrats verriers et au moins une couche intercalaire en matériau polymère agencé entre les substrats, le procédé comprenant le bombage des substrats, le refroidissement contrôlé des substrats, l'assemblage des substrats verriers et de la couche intercalaire, est caractérisé en ce qu'il comprend les étapes suivantes dans l'ordre suivant:
- bombage thermique des substrats, puis
- refroidissement contrôlé des substrats directement à partir de la température de bombage,
   formation d'un assemblage feuilleté comprenant les substrats et la couche intercalaire, puis
- découpe de l'assemblage feuilleté dans toute son épaisseur selon une ligne (ce qui recouvre le fait que la ligne soit en plusieurs parties s'il y a plusieurs trous) sur une de ses faces principales, créant un bord découpé,
le refroidissement contrôlé comprenant un refroidissement contrôlé général et un refroidissement contrôlé local d'une zone comprenant la ligne de découpe, le refroidissement contrôlé local étant plus rapide que le refroidissement contrôlé général et créant des contraintes permanentes de compression de bord au bord découpé ultérieurement.

Le terme substrat verrier signifie : feuille de verre individuelle recouverte ou non d'une ou plusieurs couches (comme anti-reflet, antisolaire, anti-abrasion, etc). Une feuille de verre comprend deux faces principales ; il en est de même pour un substrat verrier. L'expression « assemblage feuilleté » peut désigner le vitrage feuilleté final avant sa découpe selon l'invention lorsque c'est le vitrage après découpe qui est monté sur le véhicule automobile.

Dans le cadre de la présente demande, on distingue les deux types de refroidissements suivant appliqués aux substrats verriers:
a) le « refroidissement contrôlé général » qui permet de générer des contraintes en compression sur les bords externes des substrats afin d'obtenir une résistance mécanique suffisante au niveau de ces bords. Ce refroidissement est exercé globalement à l'ensemble du vitrage. Ce type de refroidissement global est bien connu de l'homme du métier.
b) selon l'invention, un « refroidissement contrôlé local » est exercé, afin de générer des contraintes en compression permettant la découpe dans le verre après bombage et provoquant par ailleurs la présence de contraintes en compression sur les bords de la ligne qui sera ensuite découpée. Ce refroidissement contrôlé local est plus rapide que le refroidissement général.

Ainsi, le procédé de l'invention procure divers avantages par rapport aux procédés de l'art antérieur, notamment :
- il limite la découpe (ou perçage) à une unique étape après formation de l'assemblage feuilleté, dans toute l'épaisseur de l'assemblage feuilleté comprenant les deux substrats verriers et l'intercalaire, au lieu de deux découpes avant bombage pour chacun des substrats verriers, et d'une opération de finition pour éliminer la partie d'intercalaire entre les deux parties découpées des substrats;
- le problème du positionnement relatif des deux substrats verriers lors du bombage est évité ;
- la présence d'un trou lors de l'assemblage rend l'opération de dégazage complexe, le perçage après assemblage simplifie l'opération de dégazage ;
- la qualité optique est améliorée notamment pour les distorsions optiques en réflexion aux environs de la zone découpée.

En outre, le procédé permet de réaliser des contraintes permanentes de compression sur les bords créés par la découpe selon l'invention, et ce, pour chacun des deux substrats verrier assemblés. Ainsi, toute pièce à fixer dans un évidement réalisé selon l'invention peut l'être sur les deux substrats verriers assemblés et non sur un seul comme selon l'art antérieur, garantissant une meilleure robustesse de fixation.

Selon une caractéristique, le refroidissement contrôlé local constitue un refroidissement inhomogène des faces principales. Si le refroidissement contrôlé local est appliqué sur les substrats verriers séparément (substrats verrier non accolés), il peut être appliqué sur une seule ou les deux surfaces principales de chaque substrat verrier. Si le refroidissement contrôlé local est appliqué sur un empilement des substrats verriers (qui sont donc accolés), alors le refroidissement contrôlé local peut être appliqué sur une seule ou les deux surfaces principales de l'empilement.

Le refroidissement contrôlé local de la zone comprenant la ligne destinée à être découpée, est plus rapide que le refroidissement contrôlé général desdits substrats. Le refroidissement local est appliqué au niveau de la ligne à découper ultérieurement. Cette zone de refroidissement local recouvre toute la ligne de découpe généralement d'au moins 1 mm de part et d'autre de cette ligne. Dans certain cas, le refroidissement local peut être élargi également à une zone voisine qui sera éliminée de l'assemblage feuilleté mais qui ne subira pas nécessairement directement l'outil de découpe. A titre d'exemple, si l'on souhaite réaliser un trou de quelques centimètres de diamètre dans l'assemblage feuilleté, on peut réaliser le refroidissement local sur toute la surface correspondant au trou (en fait de façon un peu plus étendue que le trou), alors que la découpe ne sera exercée que selon le contour du trou. Dans le cas d'un trou de relativement grande dimension (cas de la découpe de l'orifice correspondant à l'ouvrant d'un toit ouvrant), il est préférable d'exercer le refroidissement contrôlé local seulement sur la ligne destinée à être découpée. Il est en effet inutile d'exercer ce refroidissement contrôlé local sur toute la surface destinée à être évidée si celle-ci est grande. La méthode de refroidissement local suivant le contour de la zone à découper est préférée lorsque la dimension la plus petite de la zone subissant le refroidissement contrôlé local a une dimension supérieure 80 mm dans la face principale du vitrage. Elle reste possible pour des dimensions inférieures. Lorsqu'un évidement dépasse 80 mm de largeur en l'un quelconque de ses endroits, il est préférable d'exercer le refroidissement local sur le contour de l'évidement (et non pas sur toute la surface de l'évidement).

Le refroidissement contrôlé local est avantageusement obtenu par convection, conduction, rayonnement, ou une combinaison de ces moyens.

Généralement, le refroidissement contrôlé local est exercé entre le début et la fin du refroidissement général. Cependant, il n'est pas exclu de commencer le refroidissement local vers la fin du bombage alors que le refroidissement général n'a pas commencé. Ainsi, le refroidissement contrôlé local est généralement exercé dans une chambre de refroidissement de préférence au début du refroidissement général du vitrage dans la chambre de refroidissement. En variante, il peut être commencé en fin de chambre de bombage.

Une chambre de refroidissement contrôlé exerce le refroidissement contrôlé général. Si le refroidissement contrôlé local y est aussi exercé, cette chambre est de plus équipée des moyens nécessaires à l'application de ce refroidissement contrôlé local. Ce moyen peut par exemple être une buse venant souffler localement sur une face des feuilles superposées. Il peut aussi s'agir d'un élément métallique froid (refroidi intérieurement par de l'air par exemple) venant en contact avec la zone locale à refroidir plus rapidement.

Avantageusement, le bombage et le refroidissement sont tous deux réalisés sur les deux substrats verriers agencés de façon accolée (c'est-à-dire juxtaposés, notamment superposés, sans aucun moyen d'adhésion entre les substrats). Notamment, les deux substrats accolés peuvent circuler dans au moins une chambre de bombage puis dans au moins une chambre de refroidissement contrôlé, le refroidissement contrôlé localisé débutant éventuellement dans la dernière chambre de bombage ou dans une chambre de refroidissement contrôlé.

Le bombage des substrats verriers accolés est réalisé sans matière organique entre eux compte tenu de la température nécessaire au bombage thermique. Le bombage thermique est réalisé avant assemblage avec l'intercalaire en matériau polymère puisque ce dernier commence à se dégrader à partir de 160°C avec formation de bulles. Si l'on refroidissait à partir d'une telle basse température, il serait par ailleurs impossible de générer des contraintes permanentes de compression de bord dans le verre.

Le bombage des substrats verriers peut notamment être réalisé par pressage et/ou aspiration à la température de bombage, comme enseigné par les WO02064519, WO2006072721, WO2004/087590. Ce bombage est réalisé sur les substrats verriers devant être ensuite assemblés, de façon accolée. Notamment, les deux substrats verriers accolés peuvent circuler dans des chambres de prébombage par gravité, puis dans une chambre de pressage et/ou aspiration et enfin dans des chambres de refroidissement contrôlé, le refroidissement contrôlé local débutant éventuellement en fin pressage ou dans les chambres de refroidissement. L'intégralité du refroidissement contrôlé, lequel commence à une température supérieure à 580°C (généralement entre 650 et 580°C), est réalisé dans les chambres de refroidissement, en commençant éventuellement préalablement dans la dernière chambre de bombage, et ce, au moins jusqu'à ce que la température baisse jusqu'à 520°C, voire en-dessous de cette température.

Le refroidissement contrôlé (général et local) est exercé alors que les feuilles de verre superposées viennent d'être bombées à leur température de bombage. Tout le processus de refroidissement est généralement réalisé directement à partir de la température de bombage. En dehors des zones subissant le refroidissement local contrôlé, la température du verre baisse généralement de la température de bombage jusqu'à la température ambiante sans jamais remonter (baisse monotone de la température).

Le fait de bomber simultanément à l'état accolé les deux feuilles destinées à être assemblées présente l'avantage de ce que les différents substrats verriers peuvent être d'épaisseur et de teinte éventuellement différents. En effet, les deux substrats vont bien prendre les mêmes courbures malgré leurs différences.

Le bombage des substrats verriers peut également être réalisé par pressage et/ou aspiration exercé sur les substrats verriers individuellement (« feuille à feuille »).

Le bombage n'est pas nécessairement exercé dans une chambre, les outils de bombage pouvant être à l'air libre.

De même, les refroidissements contrôlés général et local ne sont pas nécessairement exercés dans une chambre.

De préférence, le début du refroidissement contrôlé général est contrôlé entre 0,3 et 8°C/seconde, et de manière encore préférée entre 0,3 et 2°C/seconde jusqu'à ce que la température du verre (entre 650 et 580°C en sortie du bombage) atteigne au moins 520°C.

Pour le cas ou les substrats verriers sont accolés avant le refroidissement local, le refroidissement contrôlé local est exercé d'un seul côté en regard de l'une des faces des deux substrats verriers accolés, ou bien des deux côtés opposés des deux substrats verriers accolés et en vis-à-vis. Si le refroidissement contrôlé local est appliqué contre la surface d'un seul substrat verrier, il produit ses effets dans toute l'épaisseur des deux substrats verriers accolés, dans la mesure où l'épaisseur des substrats accolés n'est pas trop importante, bien entendu, et que le refroidissement local soit de durée et d'intensité suffisante. Le refroidissement local contrôlé peut être exercé d'un seul côté de l'empilement des substrats à condition de garantir un refroidissement local contrôlé plus rapide, dans toute l'épaisseur, que le refroidissement contrôlé général. Il peut aussi être exercé des deux côtés, et les refroidissements exercés de chaque côté doivent être dans ce cas en vis-à-vis.

Le refroidissement contrôlé local est suffisant en durée et en intensité pour que les contraintes de bord après découpe de l'assemblage feuilleté soient supérieures à 4 MPa et de préférence supérieures à 8 MPa. Des tests de routine permettent aisément cette mise au point.

Le refroidissement contrôlé général du vitrage peut de manière connue utiliser un transfert thermique tel que la convection, rayonnement, conduction, ou une combinaison de ces trois modes de transfert de chaleur.

Dans la présente demande, on peut appeler « zone en compression » ou « zone de compression » la zone ayant subi le refroidissement contrôlé local.

Le refroidissement différencié et localisé des substrats verriers pour obtenir les zones de compression peut être réalisé par tous moyens, par exemple par convection, ou rayonnement, ou encore conduction, ou bien une combinaison de ces moyens. Ce refroidissement différencié local consiste à refroidir plus rapidement sur la ligne destinée à être découpée après assemblage des substrats verriers que le reste du vitrage.

La convection consiste à souffler de l'air froid (air à température ambiante) dirigé sur les zones que l'on veut mettre en compression. Suivant la vitesse de refroidissement moyenne du vitrage, seront ajustées la température de l'air injecté et/ou l'intensité du soufflage.

La conduction vise à mettre en contact les parties du verre que l'on veut refroidir plus rapidement, avec un matériau plus froid que la surface du verre.

Concernant le rayonnement, on peut utiliser un matériau plus froid que l'on vient placer en regard avec le verre. L'échange thermique par rayonnement va permettre un refroidissement local plus important de la zone en vis-à-vis du matériau.

Selon un autre exemple, on utilise des caches qui limitent la vitesse de refroidissement en dehors des zones où l'on veut établir des contraintes en compression. En dehors des caches sont ainsi créées des zones, qui correspondront aux zones de compression, pour lesquelles le refroidissement du verre est plus important.

Un exemple de cache est un matériau isolant, en particulier fibreux, de surface équivalente à celle du vitrage et dans lequel sont pratiquées des ouvertures. Le matériau est placé proche du verre chaud lors de sa phase de refroidissement. Placé dans une ambiance froide, les parties du vitrage se trouvant en regard des ouvertures se refroidissent plus rapidement que celles qui sont cachées.

On peut utiliser par conséquent des matériaux de revêtement qui augmentent ou diminuent l'émissivité du verre en surface.

On peut utiliser un revêtement plus émissif que la surface du verre et le mettre contre des zones de compression souhaitées, ces zones se refroidiront alors plus vite.

A l'inverse de l'exemple ci-dessus, on peut utiliser un revêtement moins émissif que la surface du verre et le mettre contre la surface du verre en dehors des zones de compression souhaitées, ces zones se refroidiront alors plus lentement que les zones à mettre en compression.

Comme matériaux qui augmentent ou diminuent l'émissivité du verre en surface, on peut utiliser des matériaux permettant de revêtir facilement la surface du verre. Dans ce cas, ils sont de préférence non toxiques, résistants à la température, et sont facilement dispersibles ou solubles dans l'eau.

Le début du refroidissement général est contrôlé préférentiellement entre 0,3 et 2°C par seconde depuis la température de fin de bombage, entre 580°C et 650°C, en sortie de bombage jusqu'à ce que la température du verre atteigne 520°C, voire plus bas.

En dessous de 520°C, on peut exercer un refroidissement convectif de l'ensemble du vitrage afin d'accélérer le processus. En dessous de 480°C, il est inutile de continuer à exercer le refroidissement contrôlé local, l'intégralité du vitrage pouvant alors subir le même refroidissement général. Le verre sort d'une éventuelle chambre de refroidissement en général à moins de 300°C.

A titre d'exemple, le refroidissement contrôlé local est exercé au moyen d'une buse de soufflage d'air dont une extrémité présente une section de forme adaptée pour souffler sur la ligne à découper, et est apposée contre au moins un des substrats verriers au niveau de la ligne à découper. Par exemple, si la ligne à découper a la forme d'un cercle, l'orifice de la buse peut avoir la forme d'un disque ou d'une couronne. Dans le cas d'un disque, le diamètre du disque est légèrement supérieur à celui du cercle à découper et c'est toute la surface à l'intérieur du cercle qui subira le refroidissement contrôlé local. Dans le cas d'une buse en couronne, on souffle sur une zone en couronne sur le cercle et pas à l'intérieur de cette couronne.

En variante ou de manière combinée, le refroidissement contrôlé local est obtenu par l'application contre ou au voisinage de la surface du verre d'un matériau de revêtement provisoire notamment du type tissu augmentant ou diminuant le rayonnement thermique vers ou émis par le verre, et pourvu d'au moins une ouverture, cette ouverture correspondant à la zone comprenant la ligne de découpe ou bien à la partie restante du vitrage (zone ne comprenant pas la ligne de découpe) selon le type du matériau. Dans ce cas, le refroidissement différencié (refroidissement local plus intense sur la ligne à découper que le refroidissement général à côté de la ligne à découper) est ici obtenu en jouant sur la différence de rayonnement thermique émis par le verre en conséquence de l'application du matériau de revêtement provisoire.

En variante ou de manière combinée, le refroidissement contrôlé local est obtenu par l'application contre la surface du verre d'un matériau de contact à la température inférieure à celle du verre, les zones en contact comprenant la ligne à découper. Il peut s'agir d'un élément en métal froid comme en acier recouvert d'un tissu métallique pour éviter les chocs thermiques. Cet élément en métal froid peut être parcouru par un fluide de refroidissement (air ou eau) pour le maintenir froid. Le refroidissement différencié (refroidissement local plus rapide que le refroidissement général à côté de la zone à découper) est ici obtenu en jouant sur la différence de transfert thermique par conduction émis par le verre en conséquence de l'application du matériau de contact.

Le procédé de l'invention procure notamment un vitrage feuilleté pour lequel la dimension de la découpe est adaptée à l'utilisation particulière du vitrage.

Selon l'invention, le bord découpé peut être destiné à accueillir une pièce fonctionnelle (comme une antenne, un feu stop, une caméra, etc.) fixée aux deux substrats verriers assemblés, ou peut servir de simple passage d'axes ou câbles, et/ou constitue la partie ouverte d'un toit ouvrant.

L'invention a également trait à un vitrage feuilleté bombé comprenant au moins deux substrats verriers et au moins une couche intercalaire en matériau polymère agencée entre les substrats, et au moins une partie évidée (orifice ou encoche) dans son épaisseur, caractérisé en ce que les contours découpés des deux substrats verriers dans la partie évidée présentent une parfaite superposition, et en ce que les contraintes permanentes de compression de bord de ces contours sont supérieures à 4 MPa, de préférence supérieures à 8 MPa. Les contraintes de compression de bord sont généralement inférieures à 20 MPa.

Le vitrage feuilleté peut être façonné en bord de la découpe, par exemple chanfreiné sur au moins l'un des substrats, ou sur les deux substrats.

A titre d'exemple d'application, le vitrage feuilleté peut être une lunette arrière de véhicule automobile, la matière découpée pouvant constituer un orifice (partie évidée) pour le passage d'un élément d'équipement comme un axe d'essuie-glace. Le contour de l'orifice présente des contraintes de compression de bord conformément à l'invention.

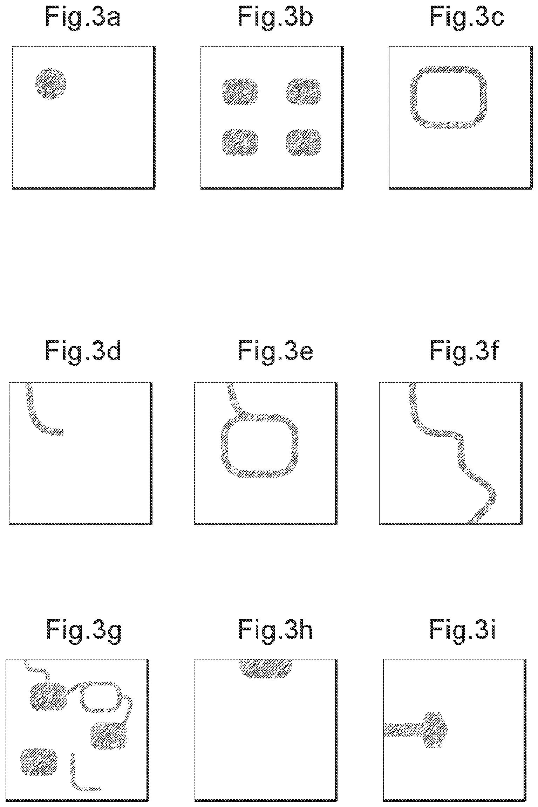

A titre d'autre exemple d'application, le vitrage feuilleté constitue un toit ouvrant, la matière découpée pouvant constituer une partie évidée formant l'ouvrant du toit. Selon cette réalisation, la découpe a constitué un orifice entièrement à l'intérieur des faces principales du vitrage feuilleté. Selon un autre exemple, l'invention permet la réalisation d'un toit de véhicule, le vitrage feuilleté constituant un toit ouvrant, découpé en au moins deux parties après assemblage en feuilleté, lesdites parties étant parfaitement coïncidentes à l'endroit où la découpe selon l'invention a été effectuée. Un tel type de toit peut donc être ouvert par déplacement de l'une des parties de toit, voir déplacement de plusieurs parties de toit. Le type de découpe selon l'invention adapté à ce type d'application est représenté à la figure 3f. Ainsi l'invention concerne également un procédé de fabrication d'un toit ouvrant de véhicule, comprenant le procédé de préparation d'un vitrage feuilleté et découpé selon l'invention, la découpe produisant deux parties, chaque partie comprenant un bord dont le contour coïncide avec un bord de l'autre partie lesdits deux bords ayant été produits par la découpe, les deux parties étant montées en toit ouvrant du véhicule à l'aide de moyens de fixation et de guidage, les deux parties pouvant se rapprocher ou s'écarter conformément aux moyens de guidage pour fermer ledit toit par juxtaposition des deux bords ou pour ouvrir ledit toit par éloignement des deux bords. Une seule de ces parties du vitrage feuilleté peut être monté mobile sur le véhicule ou les deux parties peuvent être montées mobiles sur le véhicule. Les moyens de fixation sont ceux reliant le vitrage en deux parties au véhicule. Les moyens de guidage sont ceux imposant le mouvement de l'une ou des deux parties lors de l'ouverture ou la fermeture du toit ouvrant. Le mouvement peut être un soulèvement suivi d'une translation ou une rotation ou tout autre mouvement permettant d'ouvrir et refermer le toit par déplacement de l'une ou des deux parties du vitrage feuilleté. Les bords des parties que l'on écarte ou rapproche lors de l'ouverture ou fermeture du toit sont ceux qui ont été créés lors de la découpe et c'est pourquoi ils coïncident parfaitement. Bien entendu, à la fermeture du toit, les bords sont rapprochés avec la même direction qu'ils ont été créés lors de la découpe.

L'étape de découpe est obtenue par des moyens de découpe connus comme une scie cloche diamantée, une fraiseuse diamantée, un jet d'eau.

Selon le moyen de découpe choisi, on peut découper l'assemblage feuilleté à partir d'une seule de ses faces principales ou de ses deux côtés à la fois par l'un des moyens suivants :
- scie cloche ou fraiseuse : on découpe de préférence les deux faces principales à la fois,
- jet d'eau : un seul côté suffit.

Le nombre d'opérations dans le procédé de fabrication d'un vitrage feuilleté selon l'invention est réduit par rapport aux procédés connus de découpage avant bombage. Par ailleurs, on assure d'obtenir une parfaite continuité des bords de la découpe suivant les deux substrats verriers et dans l'épaisseur du vitrage assemblé.

Enfin, ce procédé de fabrication trouve tous ses avantages dans l'application particulière selon laquelle le vitrage feuilleté constitue un toit ouvrant. En effet, une économie de matière est réalisée car la partie découpée correspondant à la matière de l'évidement du vitrage peut être récupérée pour fabriquer l'ouvrant du toit. De plus, une continuité géométrique parfaite est assurée entre le toit autour de l'ouvrant et l'ouvrant, ce qui est actuellement difficilement réalisable par les procédés courants lorsque les deux vitrages (d'une part le toit comportant un orifice fixé sur le véhicule et d'autre part la partie mobile venant occulter cet orifice) sont formés par deux processus de fabrication indépendants.

L'invention permet également la réalisation de vitrages feuilletés bombés comprenant au moins une zone locale en compression permettant la découpe. Il est ainsi possible de commercialiser un vitrage feuilleté de ce type, non découpé mais comprenant une zone en compression permettant la découpe, libre au client de la réaliser ou non. On peut donc par exemple monter un tel vitrage non découpé mais découpable en toit de véhicule automobile. Le propriétaire du véhicule peut ensuite décider ou non de faire procéder à la découpe afin de constituer un toit ouvrant sur son véhicule. Bien entendu, l'endroit de la zone en compression est dûment répertorié par le constructeur de sorte que l'endroit de la découpe est clairement établi. Le vitrage feuilleté comprenant au moins une zone locale de contraintes de compression à l'intérieur de ses faces principales fait également l'objet de l'invention en tant que produit intermédiaire. Cette zone locale de contraintes de compression est distincte des contraintes de compression des bords extérieurs du vitrage formant une ceinture périphérique de contraintes de compression. La zone locale de contraintes en compression est à l'intérieur de cette ceinture de contraintes en compression de bords. La zone locale peut cependant joindre la ceinture de contraintes en compression de bords. Ainsi l'invention concerne également un vitrage feuilleté comprenant au moins deux substrats verriers et comprenant localement dans chacun des substrats verriers et en vis-à-vis dans tous les substrats verriers (les zones de compression sont placées au même endroit c'est-à-dire superposées d'un substrat verrier à l'autre dans le vitrage feuilleté) une zone comprenant des contraintes de compression permettant la découpe dudit vitrage selon une ligne comprise dans ladite zone pour former après découpe, des bords présentant des contraintes permanentes de compression de bord supérieures à 4 MPa, de préférence supérieures à 8 MPa. Généralement, les contraintes de compression de bord après découpe sont inférieures à 20 MPa. Le vitrage peut donc être fabriqué exempt d'orifice dans la zone locale de contraintes en compression. La découpe dans cette zone est réalisée ultérieurement sur les instructions du propriétaire du véhicule et peut servir à aménager par exemple un toit ouvrant ou des orifices pour la fixation de barres de toit. Ainsi, l'invention concerne aussi un vitrage selon la revendication 20 et un toit de véhicule (généralement automobile) comprenant un vitrage feuilleté bombé comprenant les contraintes permanentes de compression permettant de percer les orifices sur le vitrage feuilleté après montage sur le véhicule.

Les contraintes de compression de bord dans la ceinture périphérique sont généralement comprises entre 4 et 20 MPa. La ceinture de contraintes de compression de bord présente généralement une largeur sur chaque face principale du vitrage de 0,1 à 3 cm à compter du bord extérieur.

Le vitrage feuilleté « à découper » selon l'invention est généralement symétrique par rapport à un plan longitudinal médian passant par le milieu de sa bande transversale avant et le milieu de sa bande transversale arrière (le sens « longitudinal » correspondant au sens de déplacement du véhicule, le sens « transversal » lui étant perpendiculaire). Ce plan passe aussi par son barycentre. Le vitrage feuilleté selon l'invention peut comprendre au moins deux zones locales de contraintes en compression permettant, après perçage d'orifices à l'intérieur desdites zones, la fixation d'une barre de toit, des éléments de fixation de ladite barre passant au travers desdits orifices. Ces zones de contraintes en compression sont généralement placées symétriquement par rapport au plan de symétrie du vitrage (plan longitudinal médian) passant par le milieu de la bande transversale avant et le milieu de la bande transversale arrière du vitrage. Le vitrage feuilleté selon l'invention pour l'application en toit de véhicule avec possibilité de fixation de barres de toit comprend deux, quatre ou six zones locales de contraintes en compression permettant, après perçage d'orifice dans lesdites zones le passage d'éléments de fixation de deux barres de toit. Pour cette application, chaque zone de contraintes en compression présente généralement une aire comprise entre 0,5 cm² et 70 cm². Chaque zone de contraintes en compression est généralement à moins de 30 cm et plus généralement moins de 20 cm d'un bord longitudinal du vitrage feuilleté faisant office de toit.

La présente invention est maintenant décrite à l'aide d'exemples uniquement illustratifs et nullement limitatifs de la portée de l'invention, et à partir des illustrations ci-jointes, dans lesquelles :
- la figure 1 représente une vue schématique en coupe partielle d'un vitrage feuilleté obtenu selon le procédé de l'invention;
- la figure 2 est une variante de la figure 1 ;
- les figures 3a à 3i sont divers exemples de réalisation de formes géométriques de refroidissement contrôlés localisés ;
- la figure 4 est une vue schématique partielle en coupe d'un dispositif de refroidissement contrôlé local par soufflage appliqué à la surface du verre.
- la figure 5 représente un pavillon de toit automobile comprenant un vitrage feuilleté selon l'invention en deux parties faisant office de toit ouvrant, une partie dudit vitrage étant fixe, l'autre étant mobile.
- la figure 6 illustre un vitrage feuilleté comprenant des orifices ou des zones de contraintes en compression permettant le perçage d'orifices.
- la figure 7 est une vue schématique partielle en coupe d'un dispositif de refroidissement contrôlé local venant en contact avec la surface du verre.
- la figure 8 représente un toit de véhicule automobile vu perpendiculairement à l'une des faces principales et comprenant une ceinture de compression et quatre zones locales de contraintes en compression joignant la ceinture, lesdites zones locales étant prêtes à recevoir des orifices.

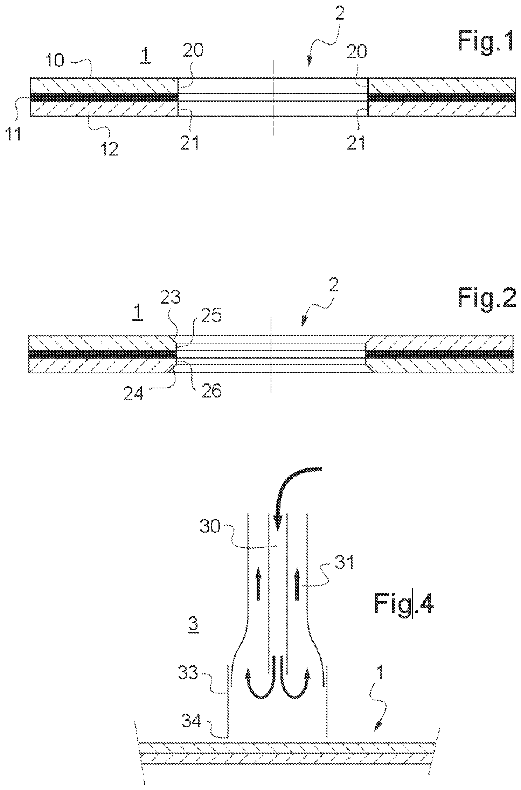

La figure 1 illustre une vue en coupe partielle d'un vitrage feuilleté 1 comprenant au moins selon son épaisseur une partie évidée 2. Le vitrage comporte au moins deux feuilles ou substrats verriers 10 et 12, et un intercalaire ou feuille intermédiaire 11 en matériau polymère agencé entre lesdits substrats verriers. Après fabrication, le vitrage présente la partie évidée 2 obtenue par perçage des deux substrats verriers et de l'intercalaire, après leur assemblage. L'orifice obtenu dans le premier substrat présente un contour 20, tandis que l'autre orifice dans le second substrat présente un contour 21. Selon le procédé de fabrication de l'invention :
- les deux contours 20 et 21 sont parfaitement superposés ; selon la vue en coupe, les tranches des substrats sur toute la périphérie des contours sont parfaitement alignées ; bien entendu, si le perçage est réalisé simultanément à partir des deux faces principales du vitrage, il convient de veiller à l'alignement des outils de perçage de part et d'autre du vitrage. Notamment, une découpe au jet d'eau peut être réalisée à partir d'un seul côté du vitrage feuilleté.
- les contours 20 et 21 présentent tous deux des contraintes de compression de bord, supérieures à 4 MPa, et de préférence supérieures à 8 MPa.

Les orifices des substrats peuvent être façonnés en fonction de l'application. Par exemple, la figure 2 montre l'évidement 2 avec des chanfreins 23 et 24 sur chacun des bords extérieurs des deux contours 25 et 26. L'évidement 2 présente des dimensions adaptées à l'application qui en est faite. Cet évidement sert par exemple à fixer une pièce fonctionnelle ou esthétique comme une antenne, un ventilateur, un enjoliveur, ou sert à un passage de câble etc. S'il est de grandes dimensions, cet évidement peut constituer l'ouverture d'un toit ouvrant en verre pour véhicule, en particulier automobile.

Le procédé de fabrication du vitrage comprend différentes étapes qui vont être successivement décrites. Les substrats verriers individuels 10 et 12 sont préalablement découpés selon leurs bords externes par une méthode usuelle de découpe du verre pour fournir des substrats aux formes périphériques extérieures souhaitées, selon la découpe de primitifs, la découpe en forme, leur rompage et leur façonnage éventuel. Une ou plusieurs étapes supplémentaires éventuelles de sérigraphie selon l'application, peuvent être effectuées. Sur chaîne de fabrication, de nombreux substrats sont ainsi préparés au défilé. Puis, les substrats défilant sur la chaîne de fabrication, une étape d'appairage est effectuée. Les substrats 10 et 12 sont associés ensemble par superposition. Les substrats superposés sont ensuite bombés ensemble à la forme souhaitée par le procédé de bombage choisi. La superposition des substrats verriers pour cette étape de bombage permet d'obtenir des verres aux formes générales parfaitement coïncidentes. Selon l'invention, est ensuite opérée une étape de refroidissement contrôlé général et local. Le refroidissement local est généré sur au moins une zone d'une face principale des substrats accolés correspondant au moins à la zone qui sera découpée en fin de procédé. Le refroidissement contrôlé local a pour but l'obtention de zones de compression dans l'épaisseur du vitrage aux bords découpés.

La localisation du refroidissement dans les zones destinées à être découpées vise aussi bien des surfaces que des contours. Le refroidissement localisé peut notamment être réalisé selon une simple ligne traversant le vitrage d'un bord à un autre bord, voir d'un bord au même bord. Les figures 3a à 3i illustrent des exemples de réalisation non limitatifs de refroidissements contrôlés locaux sur des zones aux formes variées.
La figure 3a présente une zone locale de compression sous la forme d'un contour fermé circulaire et d'une surface (surface hachurée) délimitée par ce cercle, permettant par exemple d'obtenir le vitrage de la figure 1.
La figure 3b montre plusieurs zones locales surfaciques en compression, indépendantes les unes des autres.
La figure 3c illustre une zone locale de compression se présentant sous la forme d'un unique contour fermé, l'intérieur du contour ne faisant pas partie de ladite zone.
La figure 3d montre une zone locale de compression sous la forme d'une ligne courbe atteignant le bord du vitrage à une seule de ses extrémités.
La figure 3e illustre une zone locale de compression sous forme d'une boucle fermée et d'une ligne courbe partant de cette boucle jusqu'au bord du vitrage.
La figure 3f montre une zone locale de compression en forme d'une ligne courbe débutant d'un bord du vitrage et atteignant le bord opposé (la ligne pourrait aussi rejoindre un bord adjacent au bord de départ).

Il est également possible de relier des zones locales de compression indépendantes à l'aide d'une ou plusieurs lignes atteignant ou non le bord du vitrage, tel qu'illustré sur la figure 3g.

Les figures 3h et 3i montrent une surface de compression débutant d'un bord du vitrage formant une encoche spécifique et atteignant le même bord du vitrage.

La figure 4 illustre un dispositif 3 schématique adapté pour souffler sur l'un des côtés des substrats accolés. Ici, on souffle de l'air à température ambiante sur une aire en forme de disque comme montré par la figure 3a, en vue de réaliser ultérieurement l'évidement des figures 1 et 2. Le temps de soufflage est compris entre 40 et 90 secondes environ. La durée de soufflage est indépendante de la surface à refroidir de manière différenciée mais par contre dépend de l'épaisseur du verre. Les 40 secondes de refroidissement local sont établies pour des substrats d'épaisseur chacun de 2,1 mm. La buse de soufflage a une terminaison de forme adaptée à la forme géométrique de la zone locale de contraintes en compression à obtenir. Elle peut notamment avoir la forme d'un contour rectangulaire pour un évidement d'assez grande dimension telle celle visant une application de toit ouvrant. Sur la figure 4, la buse 3 comporte un conduit central d'alimentation en air 30, un conduit axisymétrique 31, autour du conduit central d'alimentation 30. Le conduit 31 débouche en terminaison de la buse sur une cloche cylindrique 33 dont la paroi est constituée d'un feutre souple à base de fibres métalliques. L'extrémité libre 34 de la cloche est posée contre la surface du verre. De l'air froid est amené via le conduit d'alimentation 30 jusqu'à la cloche 34 pour être libéré contre la surface du verre à refroidir puis s'évacuer via le conduit 31. Après le refroidissement, est assuré le désappairage (la dissociation) des deux substrats 10 et 12. Puis sont effectuées de manière usuelle les étapes d'assemblage avec l'intercalaire 12, de dégazage de l'ensemble et de passage en autoclave. Ce traitement conduit à un collage entre l'intercalaire et les substrats verriers de chaque côté de l'intercalaire. Enfin est effectuée la découpe du vitrage sur la zone ayant subi le refroidissement local afin d'obtenir la ou les parties évidées souhaitées (par scie cloche diamantée, fraiseuse diamantée, jets d'eau, etc.).

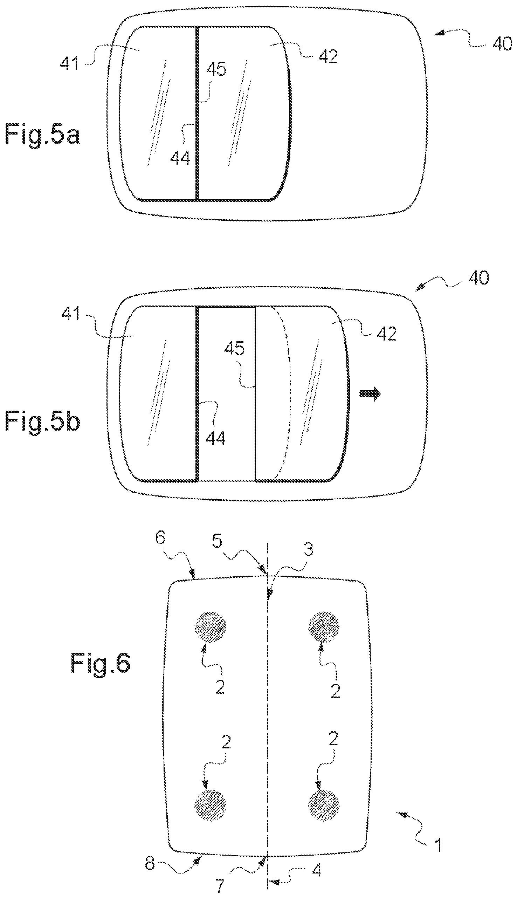

La figure 5 illustre un toit automobile 40 comprenant un vitrage feuilleté selon l'invention faisant office de toit ouvrant, ledit vitrage étant en deux parties 41 et 42, une partie 41 dudit vitrage étant fixe par rapport au véhicule, l'autre partie 42 étant mobile. En figure 5 a), le toit est fermé. En figure 5 b), le toit est ouvert grâce au déplacement de la partie 42 seulement (flèche) qui vient au-dessus de la carrosserie incluse dans le pavillon de toit du véhicule. Selon l'invention, on a fabriqué tout d'abord un seul vitrage feuilleté comprenant initialement les deux parties 41 et 42 non encore découpées. Selon l'invention, une zone locale de contraintes en compression a été réalisée à l'endroit où ce vitrage devait être découpé en une ligne le traversant entièrement (ligne ayant donné naissance aux bords 44 et 45 après découpe). La découpe selon l'invention a été réalisée sur cette ligne et a mené aux parties 41 et 42 totalement indépendantes mais dont les bords 44 et 45 viennent en parfaite coïncidence lorsque l'on referme le toit (figure 5 a)).

La figure 6 représente un vitrage 1 en verre feuilleté. Les quatre disques hachurés 2 représentent soit des orifices, soit des zones locales de contraintes en compression permettant le perçage d'orifices. Ces orifices ou zones locales de contraintes en compression sont ici entièrement à l'intérieur d'une face principale 3 du vitrage sans venir déborder sur le bord externe du vitrage (comme c'est le cas pour une encoche). Les orifices sont placés symétriquement par rapport au plan de symétrie 4 passant par le milieu 5 de la bande avant 6 et le milieu 7 de la bande arrière 8 du panneau 1.

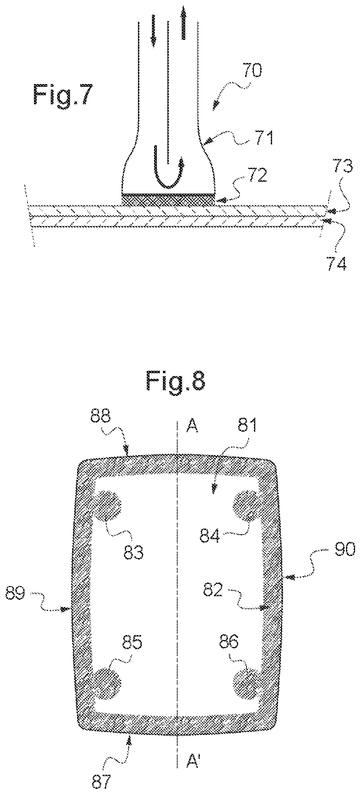

La figure 7 illustre un dispositif 70 schématique adapté pour refroidir par conduction une zone locale par une face principale d'un empilement de deux substrats 73 et 74 accolés. Un tuyau métallique 71, fermé au niveau de son extrémité inférieure, est parcouru par de l'air froid comme indiqué par les flèches. Le contact avec le verre entre le tuyau métallique et le verre est adouci grâce à un feutre 72 en fibres réfractaires pour réduire le risque de casse par choc thermique. On aboutit ainsi à la formation d'une zone locale de contraintes en compression à l'endroit du contact entre le feutre 72 et le verre.

La figure 8 représente un toit de véhicule automobile comprenant un vitrage feuilleté, vu perpendiculairement à l'une des faces principales 81. Ce vitrage feuilleté comprend deux bords transversaux 87 et 88 et deux bords longitudinaux 89 et 90. Il comprend une ceinture 82 de contraintes en compression de bord faisant tout le tour du vitrage. Le plan longitudinal médian AA' (perpendiculaire à la figure) est un plan de symétrie du vitrage et est perpendiculaire aux bords transversaux 87 et 88 qui sont opposés entre eux. A l'intérieur de la ceinture de contraintes en compression de bord se trouvent quatre zones locales de contraintes en compression 83, 84, 85, 86. Ces zones locales joignent ici la ceinture. Ces zones de compression sont représentées par des hachures mais dans la réalité, elles ne sont pas visibles à l'œil nu. Les zones locales 83 et 84 sont placées symétriquement l'une vis-à-vis de l'autre par rapport au plan de symétrie AA'. Les zones locales 85 et 86 sont placées symétriquement l'une vis-à-vis de l'autre par rapport au plan de symétrie AA'. Ces zones locales offrent la possibilité de percer des orifices au travers du vitrage feuilleté pour le passage d'éléments de fixation de barres de toit. Deux barres de toit peuvent être fixées, soit parallèlement au plan de symétrie AA' entre les points 83 et 85 pour l'une et entre les points 84 et 86 pour l'autre, soit perpendiculairement au plan de symétrie AA', entre les points 83 et 84 pour l'une et entre les points 85 et 86 pour l'autre.

## Revendications

1. Procédé de fabrication d'un vitrage feuilleté (1) comprenant au moins deux substrats verriers (10, 12) et au moins une couche intercalaire (11) en matériau polymère agencée entre les substrats, le procédé comprenant le bombage des substrats, le refroidissement contrôlé des substrats, l'assemblage des substrats verriers et de la couche intercalaire, **caractérisé en ce qu'**il comprend les étapes suivantes dans l'ordre suivant :
• bombage thermique des substrats,
• refroidissement contrôlé des substrats directement à partir de la température de bombage,
• formation d'un assemblage feuilleté comprenant les substrats et la couche intercalaire,
• découpe de l'assemblage feuilleté dans toute son épaisseur selon une ligne sur une de ses faces principales, créant un bord découpé,
le refroidissement contrôlé comprenant un refroidissement contrôlé général et un refroidissement contrôlé local d'une zone comprenant la ligne de découpe, le refroidissement contrôlé local étant plus rapide que le refroidissement contrôlé général et créant des contraintes permanentes de compression de bord au bord découpé ultérieurement, le refroidissement contrôlé local étant suffisant en durée et en intensité pour que les contraintes de bord après découpe de l'assemblage feuilleté soient supérieures à 4 MPa, la valeur des contraintes de bord étant déterminée entre 0,1 et 2 mm d'un bord après perçage d'un orifice par la méthode décrite dans la norme ASTM F218 - 2005 - 01.

2. Procédé selon la revendication précédente, **caractérisé en ce que** le refroidissement contrôlé local est obtenu par convection, conduction, rayonnement, ou une combinaison de ces moyens.

3. Procédé selon l'une quelconque des revendications précédentes, **caractérisé en ce que** le bombage et les refroidissements général et local sont réalisés sur les deux substrats verriers agencés de façon accolée.

4. Procédé selon l'une quelconque des revendications précédentes, **caractérisé en ce que** le refroidissement contrôlé local est exercé d'un seul côté en regard de l'une des faces des deux substrats verriers accolés.

5. Procédé selon l'une quelconque des revendications 1 à 4, **caractérisé en ce que** le refroidissement contrôlé local est exercé des deux côtés opposés des deux substrats verriers accolés et en vis-à-vis.

6. Procédé selon la revendication 3, **caractérisé en ce que** les deux substrats accolés circulent dans au moins une chambre de bombage, et dans au moins une chambre de refroidissement, le refroidissement contrôlé localisé débutant dans une chambre de bombage ou une chambre de refroidissement.

7. Procédé selon l'une quelconque des revendications précédentes, **caractérisé en ce que** le bombage est réalisé entre 580 et 650°C et **en ce que** le début du refroidissement général est contrôlé entre 0,3 et 8°C/seconde, de préférence entre 0,3 et 2°C/seconde, au moins jusqu'à ce que la température du verre atteigne 520°C.

8. Procédé selon l'une quelconque des revendications précédentes, **caractérisé en ce que** le refroidissement contrôlé local est exercé par soufflage d'air au moyen d'une buse (3) dont une extrémité présente une section de forme (34) correspondant à la zone comprenant la ligne de découpe.

9. Procédé selon l'une quelconque des revendications 1 à 7, **caractérisé en ce que** le refroidissement contrôlé local est exercé au moyen d'un matériau (72) à la forme correspondant à la forme de la zone comprenant la ligne de découpe, ledit matériau étant de température inférieure à celle du verre, ledit matériau étant mis en contact avec au moins un des substrats verriers au niveau de ladite zone.

10. Procédé selon l'une quelconque des revendications 1 à 7, **caractérisé en ce que** le refroidissement contrôlé local est exercé au moyen d'un matériau à la forme correspondant à la forme de la zone comprenant la ligne de découpe, ledit matériau étant de température inférieure à celle du verre, ledit matériau étant mis en vis-à-vis sans le contacter avec au moins un des substrats verriers au niveau de ladite zone.

11. Procédé selon l'une quelconque des revendications précédentes, **caractérisé en ce que** le refroidissement contrôlé local est obtenu par l'application contre la surface du verre d'un matériau de revêtement provisoire, notamment du type tissu, augmentant ou diminuant l'émissivité du verre, et pourvu d'au moins une ouverture.

12. Procédé selon l'une quelconque des revendications précédentes, **caractérisé en ce que** la découpe est obtenue par une scie cloche, une fraiseuse, un jet d'eau.

13. Procédé selon l'une quelconque des revendications précédentes, **caractérisé en ce que** la découpe produit un trou (2) ou une encoche dans l'épaisseur complète du vitrage feuilleté.

14. Procédé selon l'une quelconque des revendications précédentes, **caractérisé en ce que** le refroidissement contrôlé local est suffisant en durée et en intensité pour que les contraintes de bord après découpe de l'assemblage feuilleté soient supérieures à 8 MPa.

15. Procédé de fabrication d'un toit ouvrant de véhicule, comprenant le procédé de l'une des revendications précédentes, la découpe produisant deux parties (41, 42), chaque partie comprenant un bord (44, 45) dont le contour coïncide avec un bord de l'autre partie, lesdits deux bords ayant été produits par la découpe, les deux parties étant montées en toit ouvrant (40) du véhicule à l'aide de moyens de fixation et de guidage, les deux parties pouvant se rapprocher ou s'écarter conformément aux moyens de guidage pour fermer ledit toit par juxtaposition des deux bords ou pour ouvrir ledit toit par éloignement des deux bords.

16. Vitrage feuilleté bombé (1), comprenant au moins deux substrats verriers (25, 26) et au moins une couche intercalaire (11) en matériau polymère agencée entre les substrats, et au moins une encoche ou un orifice (2) découpé dans son épaisseur, **caractérisé en ce que** les contours découpés des deux substrats verriers dans l'encoche ou orifice présentent une parfaite superposition, et **en ce que** ces contours présentent des contraintes permanentes de compression de bord supérieures à 4 MPa, de préférence supérieures à 8 MPa, la valeur des contraintes de bord étant déterminée entre 0,1 et 2 mm d'un bord par la méthode décrite dans la norme ASTM F218 - 2005 - 01.

17. Vitrage feuilleté bombé selon la revendication précédente, **caractérisé en ce que** l'encoche ou orifice est chanfreinée ou façonnée (23, 24) sur au moins l'un des substrats verriers.

18. Toit ouvrant de véhicule comprenant un vitrage feuilleté bombé selon l'une des revendications 16 ou 17, ledit vitrage comprenant un orifice (2) découpé dans son épaisseur, la matière découpée pour former l'orifice constituant l'ouvrant dudit toit.

19. Lunette arrière de véhicule automobile comprenant un vitrage feuilleté bombé selon l'une des revendications de vitrage feuilleté 16 ou 17, comprenant un orifice (2) découpé dans son épaisseur pour le passage d'un élément d'équipement comme un axe d'essuie-glace.

20. Vitrage feuilleté bombé comprenant au moins deux substrats verriers, comprenant une ceinture (82) de contraintes de compression de bord et comprenant localement dans chacun des substrats verriers et de façon superposée dans tous les substrats verriers une zone locale de contraintes de compression (83, 84, 85, 86) exempt d'orifice et distincte de ladite ceinture, permettant la découpe dudit vitrage selon une ligne comprise dans ladite zone locale pour former après découpe, des bords présentant des contraintes de compression de bord supérieures à 4 MPa, de préférence supérieures à 8 MPa, la valeur des contraintes de bord étant déterminée entre 0,1 et 2 mm d'un bord après perçage d'un orifice par la méthode décrite dans la norme ASTM F218 - 2005 - 01.

21. Toit de véhicule comprenant le vitrage de la revendication précédente.

## Patentansprüche

1. Verfahren zur Herstellung einer Verbundglasscheibe (1), umfassend mindestens zwei Glassubstrate (10, 12) und mindestens eine Zwischenschicht (11) aus Polymermaterial, die zwischen den Substraten angeordnet ist, wobei das Verfahren das Biegen der Substrate, das gesteuerte Abkühlen der Substrate, das Zusammenfügen der Glassubstrate und der Zwischenschicht umfasst, **dadurch gekennzeichnet, dass** es die folgenden Schritte in der folgenden Reihenfolge umfasst:
• thermisches Biegen von Substraten,
• gesteuertes Abkühlen von Substraten direkt ausgehend von der Biegetemperatur,
• Bilden eines Verbundaufbaus, der die Substrate und die Zwischenschicht umfasst,
• Schneiden des Verbundaufbaus in seiner gesamten Dicke entlang einer Linie auf einer seiner Hauptflächen, wodurch eine Schnittkante entsteht,
wobei das gesteuerte Abkühlen ein gesteuertes allgemeines Abkühlen und ein gesteuertes lokales Abkühlen eines Bereichs, der die Schnittlinie umfasst, umfasst, wobei das gesteuerte lokale Abkühlen schneller ist als das gesteuerte allgemeine Abkühlen und permanente Kantendruckspannungen an der anschließend geschnittenen Kante erzeugt, wobei das gesteuerte lokale Abkühlen in Dauer und Intensität ausreichend ist, damit die Kantenspannungen nach dem Schneiden des Verbundaufbaus größer als 4 MPa sind, wobei der Wert der Kantenspannungen zwischen 0,1 und 2 mm einer Kante nach dem Bohren einer Öffnung durch das in der Norm ASTM F218 - 2005 - 01 beschriebene Verfahren bestimmt wird.

2. Verfahren nach dem vorstehenden Anspruch, **dadurch gekennzeichnet, dass** das gesteuerte lokale Abkühlen durch Konvektion, Leitung, Strahlung oder eine Kombination dieser Mittel erreicht wird.

3. Verfahren nach einem der vorstehenden Ansprüche, **dadurch gekennzeichnet, dass** das Biegen und das allgemeine und lokale Abkühlen auf den zwei aneinandergefügt angeordneten Glassubstraten durchgeführt werden.

4. Verfahren nach einem der vorstehenden Ansprüche, **dadurch gekennzeichnet, dass** das gesteuerte lokale Abkühlen einseitig gegenüber der einen der Flächen der zwei aneinandergefügten Glassubstrate ausgeübt wird.

5. Verfahren nach einem der Ansprüche 1 bis 4, **dadurch gekennzeichnet, dass** das gesteuerte lokale Abkühlen von den beiden entgegengesetzten Seiten der zwei aneinandergefügten und einander zugewandten Glassubstrate ausgeübt wird.

6. Verfahren nach Anspruch 3, **dadurch gekennzeichnet, dass** die zwei aneinandergefügten Substrate in mindestens einer Biegekammer und in mindestens einer Abkühlkammer zirkulieren, wobei das gesteuerte lokalisierte Abkühlen in einer Biegekammer oder einer Kühlkammer beginnt.

7. Verfahren nach einem der vorstehenden Ansprüche, **dadurch gekennzeichnet, dass** das Biegen zwischen 580 und 650 °C durchgeführt wird, und **dass** der Beginn des allgemeinen Abkühlens zwischen 0,3 und 8 °C/Sekunde, vorzugsweise zwischen 0,3 und 2 °C/Sekunde, gesteuert wird, mindestens bis die Temperatur des Glases 520 °C erreicht.

8. Verfahren nach einem der vorstehenden Ansprüche, **dadurch gekennzeichnet, dass** das gesteuerte lokale Abkühlen durch Einblasen von Luft mittels einer Düse (3) ausgeübt wird, deren eines Ende einen Abschnitt (34) mit einer Form aufweist, die dem Bereich entspricht, der die Schnittlinie umfasst.

9. Verfahren nach einem der Ansprüche 1 bis 7, **dadurch gekennzeichnet, dass** das gesteuerte lokale Abkühlen mittels eines Materials (72) ausgeübt wird, dessen Form der Form des Bereichs entspricht, der die Schnittlinie umfasst, wobei das Material eine niedrigere Temperatur als die des Glases aufweist, wobei das Material mit mindestens einem der Glassubstrate auf Höhe des Bereichs in Kontakt gebracht wird.

10. Verfahren nach einem der Ansprüche 1 bis 7, **dadurch gekennzeichnet, dass** das gesteuerte lokale Abkühlen mittels eines Materials ausgeübt wird, das eine Form aufweist, die der Form des Bereichs entspricht, der die Schnittlinie umfasst, wobei das Material eine Temperatur aufweist, die niedriger ist als die des Glases, wobei das Material ohne Kontakt mit mindestens einem der Glassubstrate auf Höhe des Bereichs gegenüberliegend aufgebracht wird.

11. Verfahren nach einem der vorstehenden Ansprüche, **dadurch gekennzeichnet, dass** das gesteuerte lokale Abkühlen durch Aufbringen eines provisorischen Beschichtungsmaterials, insbesondere vom Gewebetyp, auf die Oberfläche des Glases erreicht wird, das die Emissivität des Glases erhöht oder verringert und mit mindestens einer Öffnung versehen ist.

12. Verfahren nach einem der vorstehenden Ansprüche, **dadurch gekennzeichnet, dass** das Schneiden durch eine Lochsäge, eine Fräsmaschine, einen Wasserstrahl erfolgt.

13. Verfahren nach einem der vorstehenden Ansprüche, **dadurch gekennzeichnet, dass** das Schneiden ein Loch (2) oder eine Kerbe in der gesamten Dicke der Verbundglasscheibe erzeugt.

14. Verfahren nach einem der vorstehenden Ansprüche, **dadurch gekennzeichnet, dass** das gesteuerte lokale Abkühlen in Dauer und Intensität ausreichend ist, damit die Kantenspannungen nach dem Schneiden des Verbundaufbaus größer als 8 MPa sind.

15. Verfahren zur Herstellung eines Fahrzeugschiebedachs, umfassend das Verfahren nach einem der vorstehenden Ansprüche, wobei durch das Schneiden zwei Teile (41, 42) erzeugt werden, wobei jeder Teil eine Kante (44, 45) umfasst, deren Kontur mit einer Kante des anderen Teils übereinstimmt, wobei die beiden Kanten durch das Schneiden erzeugt worden sind, wobei die zwei Teile mittels Befestigungs- und Führungsmitteln als Schiebedach (40) des Fahrzeugs montiert sind, wobei sich die zwei Teile in Übereinstimmung mit den Führungsmitteln aufeinander zu oder voneinander weg bewegen können, um das Dach durch Nebeneinanderbringen der beiden Kanten zu schließen, oder um das Dach durch Auseinanderbringen der beiden Kanten zu öffnen.

16. Gebogene Verbundglasscheibe (1), umfassend mindestens zwei Glassubstrate (25, 26) und mindestens eine zwischen den Substraten angeordnete Zwischenschicht (11) aus Polymermaterial und mindestens eine in ihre Dicke geschnittene Kerbe oder Öffnung (2), **dadurch gekennzeichnet, dass** die aus den zwei Glassubstraten ausgeschnittenen Konturen in der Kerbe oder Öffnung eine perfekte Überlagerung aufweisen, und **dass** diese Konturen permanente Kantendruckspannungen größer als 4 MPa, vorzugsweise größer als 8 MPa, aufweisen, wobei der Wert der Kantenspannungen zwischen 0,1 und 2 mm von einer Kante nach dem in der Norm ASTM F218 - 2005 - 01 beschriebenen Verfahren bestimmt wird.

17. Gebogene Verbundglasscheibe nach dem vorstehenden Anspruch, **dadurch gekennzeichnet, dass** die Kerbe oder Öffnung auf mindestens einem der Glassubstrate abgeschrägt oder geformt (23, 24) ist.

18. Fahrzeugschiebedach, umfassend eine gebogene Verbundglasscheibe nach einem der Ansprüche 16 oder 17, wobei die Glasscheibe eine in ihre Dicke geschnittene Öffnung (2) umfasst, wobei das zur Bildung der Öffnung geschnittene Material die Öffnung des Daches bildet.

19. Heckscheibe eines Kraftfahrzeugs, umfassend eine gebogene Verbundglasscheibe nach einem der Ansprüche 16 oder 17, die eine in ihrer Dicke geschnittene Öffnung (2) für den Durchgang eines Ausstattungselements wie einer Scheibenwischerwelle umfasst.

20. Gebogene Verbundglasscheibe, umfassend mindestens zwei Glassubstrate, die ein Band (82) von Kantendruckspannungen umfasst und lokal in jedem der Glassubstrate und in überlagernder Weise in allen Glassubstraten einen lokalen Bereich von Druckspannungen (83, 84, 85, 86) umfasst, der frei von Öffnungen und von dem Band verschieden ist, die das Schneiden der Scheibe entlang einer Linie, die in dem lokalen Bereich enthalten ist, ermöglicht, um nach dem Schneiden Kanten zu bilden, die Kantendruckspannungen größer als 4 MPa, vorzugsweise größer als 8 MPa, aufweisen, wobei der Wert der Kantenspannungen zwischen 0,1 und 2 mm von einer Kante nach dem Bohren einer Öffnung durch das in der Norm ASTM F218 - 2005 - 01 beschriebene Verfahren bestimmt wird.

21. Fahrzeugdach, umfassend die Glasscheibe nach dem vorstehenden Anspruch.

## Claims

1. A process for manufacturing laminated glazing (1) comprising at least two glass substrates (10, 12) and at least one interlayer (11) made of a polymer material arranged between the substrates, the process comprising the bending of the substrates, the controlled cooling of the substrates, the assembly of the glass substrates and of the interlayer, **characterized in that** it comprises the following steps in the following order:
• bending of the substrates,
• controlled cooling of the substrates directly starting from the bending temperature,
• formation of a laminated assembly comprising the substrates and the interlayer,
• cutting the laminated assembly through its entire thickness along a line on one of its main faces, creating a cut edge,
the controlled cooling comprising a general controlled cooling and a local controlled cooling of a zone comprising the cutting line, the local controlled cooling being faster than the general controlled cooling and creating permanent compressive edge stresses at the edge to be cut subsequently, the local controlled cooling is sufficient in duration and in intensity so that the edge stresses after cutting of the laminated assembly are greater than 4 MPa, the value of the edge stresses being determined between 0.1 and 2 mm from one edge after drilling an orifice by the method described in the standard ASTM F218-2005-01.

2. The process as claimed in the preceding claim, **characterized in that** the local controlled cooling is obtained by convection, conduction, radiation, or a combination of these means.

3. The process as claimed in any one of the preceding claims, **characterized in that** the bending and the general and local coolings are carried out on the two glass substrates arranged side-by-side.

4. The process as claimed in any one of the preceding claims, **characterized in that** the local controlled cooling is applied from a single side opposite one of the faces of the two side-by-side glass substrates.

5. The process as claimed in any one of claims 1 to 4, **characterized in that** the local controlled cooling is applied from two opposite sides of the two side-by-side glass substrates that are facing each other.

6. The process as claimed in claim 3, **characterized in that** the two side-by-side substrates move into at least one bending chamber, and into at least one cooling chamber, the localized controlled cooling beginning in a bending chamber or a cooling chamber.

7. The process as claimed in any one of the preceding claims, **characterized in that** the bending is carried out between 580 and 650°C and **in that** the start of the general cooling is controlled between 0.3 and 8°C/second, preferably between 0.3 and 2°C/second, at least until the temperature of the glass reaches 520°C.

8. The process as claimed in any one of the preceding claims, **characterized in that** the local controlled cooling is applied by blowing air by means of a nozzle (3), one end of which has a cross section of shape (34) corresponding to the zone comprising the cutting line.

9. The process as claimed in any one of claims 1 to 7, **characterized in that** the local controlled cooling is applied by means of a material (72) with the shape corresponding to the shape of the zone comprising the cutting line, said material having a temperature lower than that of the glass, said material being brought into contact with at least one of the glass substrates at said zone.

10. The process as claimed in any one of claims 1 to 7, **characterized in that** the local controlled cooling is applied by means of a material with the shape corresponding to the shape of the zone comprising the cutting line, said material having a temperature lower than that of the glass, said material being brought opposite but not in contact with at least one of the glass substrates at said zone.

11. The process as claimed in any one of the preceding claims, **characterized in that** the local controlled cooling is obtained by applying against the surface of the glass a temporary coating material, in particular of fabric type, which increases or decreases the emissivity of the glass, and that is provided with at least one opening.

12. The process as claimed in any one of the preceding claims, **characterized in that** the cutting is obtained by a hole saw, a router or a water jet.

13. The process as claimed in any one of the preceding claims, **characterized in that** the cutting produces a hole (2) or a notch in the complete thickness of the laminated glazing.

14. The process as claimed in any one of the preceding claims, **characterized in that** the local controlled cooling is sufficient in duration and in intensity so that the edge stresses after cutting of the laminated assembly are greater than 8 MPa.

15. A process for manufacturing an opening sunroof of a vehicle, comprising the process of one of the preceding claims, the cutting producing two portions (41, 42), each portion comprising an edge (44, 45), the contour of which coincides with an edge of the other portion, said two edges having been produced by the cutting, the two portions being mounted as an opening sunroof (40) of the vehicle with the aid of fastening and guiding means, it being possible for the two portions to move closer together or move apart in accordance with the guiding means in order to close said roof by juxtaposition of the two edges or in order to open said roof by separating the two edges.

16. A bent laminated glazing (1), comprising at least two glass substrates (25, 26) and at least one interlayer (11) made of a polymer material arranged between the substrates, and at least one notch or orifice (2) cut in its thickness, **characterized in that** the cut contours of the two glass substrates in the notch or orifice have a perfect superposition, and **in that** the compressive edge stresses of these contours are greater than 4 MPa, preferably greater than 8 MPa, the value of the edge stresses being determined between 0.1 and 2 mm from one edge by the method described in the standard ASTM F218-2005-01.

17. The laminated glazing as claimed in the preceding claim, **characterized in that** the notch or orifice is chamfered or shaped (23, 24) on at least one of the glass substrates.

18. An opening sunroof of a vehicle comprising laminated glazing from one of the preceding claims 16 or 17, said roof comprising an orifice (2) cut in its thickness, **characterized in that** the material cut to form the orifice constitutes the opening of said roof.

19. A motor vehicle rear window comprising laminated glazing from one of the preceding laminated glazing claims 16 or 17, said laminated glazing comprising an orifice (2) cut out in his thickness for the passage of an equipment component such as a wiper shaft.

20. A laminated glazing comprising at least two glass substrates, comprising a border (82) of compressive edge stresses and locally comprising in each of the glass substrates and in a superposed manner in all the glass substrates a local zone of compressive stresser (83, 84, 85, 86) free of orifices and different from said border, enabling the cutting of said glazing along a line within said local zone in order to form, after cutting, edges having compressive edge stresses of greater than 4 MPa, preferably of greater than 8 MPa, the value of the edge stresses being determined between 0.1 and 2 mm from one edge after drilling an orifice by the method described in the standard ASTM F218-2005-01.

21. A vehicle roof comprising the glazing from the preceding claim.
